Europäisches Patentamt

European Patent Office

Office européen des brevets

(11) Publication number: **0 131 567**
**B1**

## (12) EUROPEAN PATENT SPECIFICATION

(45) Date of publication of patent specification: **15.07.87**

(21) Application number: **83900562.6**

(22) Date of filing: **14.01.83**

(86) International application number:
**PCT/FI83/00002**

(87) International publication number:
**WO 84/02662 19.07.84 Gazette 84/17**

(51) Int. Cl.⁴: **B 01 D 1/00,** B 01 D 1/22,
B 01 D 1/26

(54) **Multiple - effect falling film evaporator.**

(43) Date of publication of application:
**23.01.85 Bulletin 85/04**

(45) Publication of the grant of the patent:
**15.07.87 Bulletin 87/29**

(84) Designated Contracting States:
**AT DE FR GB**

(56) References cited:
**DE-A-2 311 350**
**FR-A- 787 916**
**FR-A- 790 231**
**GB-A-1 325 936**
**SE-C- 115 154**
**SU-A- 629 944**
**US-A-4 145 245**

(73) Proprietor: **SAARI, Risto**
**Harjula**
**SF-02440 Luoma (FI)**

(72) Inventor: **SAARI, Risto**
**Harjula**
**SF-02440 Luoma (FI)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

## Description

The present invention concerns a multiple-effect evaporator comprising in each distilling effect a heat exchanger, the liquid to be evaporated there being disposed to flow in heat exchange with a heating steam. Evaporators of this kind are known from DE—A—2 311 350, FR—A—787 916, FR—A—790 231 or US—A—4 145 245, respectively.

Whereas in FR—A—790 231 an evaporator is shown, in which a mixture of liquid and steam ascends in heat exchanger tubes and the unevaporated liquid flows down in a further series of tubes, DE—A—2 311 350 and FR—A—787 916 disclose film evaporators in which the liquid to be evaporated rises in each distilling effect.

In modern distilling technology, in particular in that associated with seawater desalination, the so-called multiple-effect falling film evaporator has gained increasingly extensive use. In this kind of evaporator in each effect a falling film of liquid is produced, as it is shown for example in US—A—4 145 245.

In a multiple-effect distilling installation of this type, the liquid to be distilled runs on the heat exchange surface of a heat exchanger as a thin film from the upper part of the evaporator to the lower part, partially evaporating at the same time, as the heating steam is condensed on the other side of the heat exchanger surface. The heat exchanger can be composed in many ways, such as vertical tubes, horizontal tubes or plates. The unevaporated liquid runs down to the bottom of the evaporator and is therefrom pumped with a pump into the upper part either of the same or the next distilling stage, whence it once more runs down along the heat exchanger. In a multiple-effect installation, this arrangement necessities a great number of pumps, which, as they are operating close to cavitation circumstances, give rise to extra costs and need of maintenance.

The object of the invention is to teach an improvement in present evaporator designs known in the art. The more detailed object of the invention is to provide an evaporator in which the use of conventional pumps can be avoided in transporting the liquid to be evaporated. The other objects of the invention and the advantages gainable with its aid will be apparent from the disclosure of the invention.

The objects of the invention are achieved by means of a multiple-effect falling film evaporator which is mainly characterized in that the evaporator in each distilling effect comprises a second heat exchanger, composed of substantially vertical flow channels, and that said second heat exchanger has been disposed to transport the unevaporated liquid upward from below.

With other words a new design of an evaporator is applied in a multiple-effect distilling installation, so that the liquid that has run down into the lower part of a given distilling stage runs to the upper part of the next distilling stage through substantially vertical channels which are in heat exchange with the heating steam of this distilling stage.

It is thus understood that one characteristic embodiment of the invention is the combination of a horizontal tube falling film evaporator (HTFFE) and on the other hand of a vertical tube rising film evaporator (VTRFE) in such manner that the vertical evaporator transports the liquid from the lower part of the horizontal evaporator to the upper part of the next horizontal evaporator.

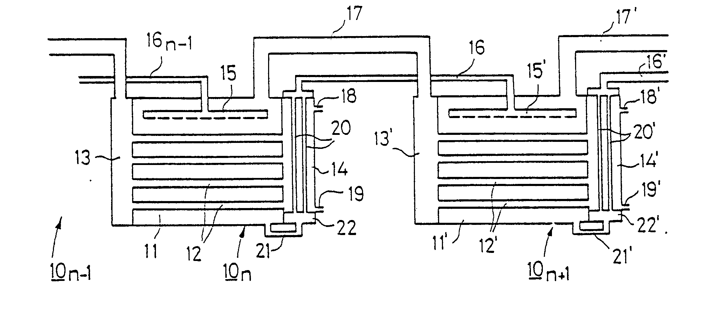

The invention is described in detail, referring to certain advantageous embodiments of the invention, depicted in the figure of the drawing attached, to which the invention is not, however, meant to be exclusively confined.

The figure of the drawing shows in schematic elevational view, two successive distilling stages of multiple-effect distilling installation in which stages an evaporator according to one embodiment of the invention has been used.

The distilling stage or effect $10_n$ of the multiple-effect distilling installation depicted in the figure consists of horizontal heat exchange tubes 12 placed substantially in the space 11, said tubes communicating by one end with space 13 and by the other end with space 14. The space 14 contains substantially vertical heat exchange tubes 20 which communicate at the lower end with the lower part of the space 11 through the tube 21 and at the upper end, through the tube 16 with a liquid distributor means 15' in the upper part of the next distilling stage $10_{n+1}$. From the upper part of the space 11 leads a vapour passage 17 to the vapour space 13' of the next distilling stage $10_{n+1}$, which further communicates with the heat exchange tubes 12' of this distilling stage.

The distilling installations operates in the manner that the liquid to be distilled flowing from the preceding distilling stage $10_{n-1}$ through the tube $16_{n-1}$ is divided through the distributing means 15, which may be of any design known in the art, e.g. a perforated tube, to the outside of the heat exchange tubes 12, where it runs as a thin film downward from above. The heating steam flows into the space 13 and therethrough into the tubes 12, in which it condenses to distillate, accumulates on the bottom of the space 14 and escapes therefrom into the tube 19. The uncondensable gases entrained with the steam are voided through the pipe 18 into the air removal system. As it condenses in the tubes 12, the vapour imparts its latent heat to the liquid film on the outside of the tubes 12, part of which liquid film is evaporated, and the vapour flows through the passage 17 into the next distilling stage $10_{n+1}$ to serve there as heating steam. The unevaporated liquid running to the bottom of the space 11 escapes into the tube 21 and thence through the water well 22 into the tubes 20. Because the tubes 20 are in heat exchange with the same steam that has heated the tubes 12, the vertical tubes 20 operate as heat exchangers, the liquid flowing in them evaporating partly, forming vapour bubbles and ultimately a powerful vapour flow which carries unevaporated liquid along with it. In this manner the liquid ascends to the upper part of the next distilling stage $10_{n+1}$, which may be located at a consideraly higher elevation than would be implied merely by the differential pressure between the distilling stages in its effect as a hydrostatic head. Thus, by this arrangement the unevaporated liquid is pumped without recourse to conventional pumps from one distilling stage to the next.

Naturally, the embodiment of the figure is not the only possible application. For instance, the tubes 20 could equally well be placed in the vapour space 13. Furthermore, part of the liquid flowing in them could be returned to the same distilling sage. Likewise, the number of ascending tubes and their diameter may vary widely according to the circumstances.

The falling film heat exchanger 12 and the rising film heat exchanger 20 may also be designed in any other way known in the art such as vertical tubes or plate heat exchangers.

### Claim

A multiple-effect falling film evaporator, comprising a plurality of successive distilling effects ($10_{n-1}$, $10_n$, $10_{n+1}$), each distilling effect comprising a heat exchanger (12; 12'), the liquid to be evaporated being disposed to flow downward from above in heat exchange with the heating steam in this heat exchanger, characterized in that each distilling effect has a second heat exchanger (20; 20') which is composed of substantially vertical flow channels, and that said second heat exchanger has been arranged to transport the unevaporated liquid upward from below to the upper part of the next distilling effect ($10_{n+1}$).

### Patentanspruch

Mehrstufen-Fallstromverdampfer, mit einer Vielzahl aufeinanderfolgender Destillierstufen ($10_{n-1}$, $10_n$, $10_{n+1}$), die jeweils einen Wärmetauscher (12; 12') aufweisen, wobei die zu verdampfende Flüssigkeit in dem Wärmetauscher in mit Wärmedampf wärmetauschender Weise von oben nach unten strömt, dadurch gekennzeichnet, daß jede Destillierstufe einen zweiten Wärmetauscher (20; 20') aufweist, der aus im wesentlichen vertikal verlaufenden Strömungskanälen besteht und so angeordnet ist, daß er die nicht verdampfte Flüssigkeit von unten zum oberen Teil der nächsten Destillierstufe ($10_{n+1}$) nach oben transportiert.

### Revendication

Evaporateur à film tombant à étages multiples, comportant une pluralité d'étages de distillation successifs ($10_{n-1}$, $10_n$, $10_{n+1}$), chaque étage de distillation comprenant un échangeur de chaleur (12, 12'), le liquide à évaporer étant disposé pour couler vers le bas à partir du haut, en échange de chaleur avec la vapeur chauffante dans cet échangeur de chaleur, caractérisé en ce que chaque étage de distillation a un seconde échangeur de chaleur (20, 20'), qui est composé de canaux d'écoulement sensiblement verticaux, et en ce que ledit second échangeur de chaleur a été conçu pour transporter le liquide non évaporé, vers le haut à partir du bas, jusqu'à la partie supérieure de l'étage suivant de distillation ($10_{n+1}$).